# DEMANDE DE BREVET EUROPEEN

(11) **EP 1 108 583 A1**
(43) Date de publication de la demande: **20.06.2001**
(21) Numéro de dépôt: 00460068.0
(22) Date de dépôt: 05.12.2000
(51) Int. Cl.: B60K 6/02, B60K 6/04

(54) **Système d'entraînement de l'arbre primaire de boîte de vitesses pour un véhicule à propulsion hybride**

(30) Priorité: 14.12.1999 FR 9915725
(71) Demandeur: Peugeot Citroen Automobiles SA, 92200 Neuilly sur Seine (FR)
(72) Inventeur: Petiot, Jean-Paul, 91460 Marcoussis (FR)
(74) Mandataire: Le Faou, Daniel

(57) **Abrégé**

Dans ce système, qui s'adresse à un véhicule dont la propulsion peut être réalisée à partir d'un moteur thermique (1) et/ou d'un moteur électrique (2), l'arbre primaire (3) est solidaire du rotor (20) du moteur électrique (2) ; le système est remarquable en ce que l'arbre primaire (3) est monté coaxialement à une extrémité de l'arbre de vilebrequin (10) du moteur thermique (1), et qu'un système de crabotage (5, 6, 7) permet, sélectivement, soit de solidariser en rotation l'arbre de vilebrequin (10) avec l'arbre primaire (3), soit, au contraire, de l'en désolidariser.

Motorisation d'un véhicule automobile à propulsion hybride.

## Description

La présente invention concerne un système d'entraînement de l'arbre primaire de la boîte de vitesses d'un véhicule à propulsion hybride.

Par l'expression « propulsion hybride », on entendra dans la présente description, et dans les revendications qui suivent, une propulsion qui est réalisée à partir d'un moteur thermique et/ou d'un moteur électrique, le véhicule étant équipé de ces deux types de moteur.

L'intérêt d'un tel agencement est qu'il est possible, dans certaines conditions, d'assurer la propulsion du véhicule soit uniquement au moyen du moteur électrique, soit uniquement au moyen du moteur thermique, soit à la fois au moyen des deux moteurs, dont les couples s'additionnent.

Ainsi, il peut être intéressant pour une circulation à vitesse réduite, par exemple en trajet urbain, de faire usage uniquement du moteur électrique.

Au contraire, pour des trajets hors agglomération, on peut faire usage soit du moteur thermique seul, soit des deux moteurs à la fois.

Il est également intéressant de pouvoir utiliser le moteur électrique pour démarrer le moteur thermique, celui-ci assurant alors la fonction traditionnellement dévolue au démarreur.

Plus précisément, la présente invention s'adresse à un système d'entraînement dans lequel l'arbre primaire est solidaire du rotor du moteur électrique, son stator étant fixe, par exemple solidaire du carter de la boîte de vitesses.

L'objectif de l'invention est de proposer un système du genre mentionné ci-dessus, qui soit d'une conception simple, d'un encombrement réduit, d'un prix de revient relativement faible , et susceptible d'être mis en oeuvre par des moyens d'actionnement également simples et sûrs.

Cet objectif est atteint, conformément à l'invention, grâce au fait que l'arbre primaire est monté coaxialement à une extrémité de l'arbre de vilebrequin du moteur thermique, et qu'il est prévu un système de crabotage qui permet, sélectivement , soit de solidariser en rotation l'arbre de vilebrequin avec l'arbre primaire, soit, au contraire, de l'en désolidariser.

Par ailleurs, selon un certain nombre de caractéristiques additionnelles, non limitatives, de l'invention :
- le système de crabotage est à commande hydraulique ;
- les moyens de commande du système de crabotage comprennent un piston hydraulique annulaire, qui entoure coaxialement l'arbre primaire et est monté fixe en rotation et mobile en translation axiale ;
- ce piston agit par l'intermédiaire d'une liaison tournante sur un manchon de crabotage solidaire en rotation de l'arbre primaire, mais mobile en translation axiale sur celui-ci ;
- ce piston est monté coulissant dans un manchon solidaire du stator dudit moteur électrique ;
- ce piston est sollicité en permanence par un moyen élastique tel qu'un ressort, qui tend naturellement à assurer le crabotage du système en l'absence de pression hydraulique ;
- l'extrémité d'arbre du vilebrequin porte un volant d'inertie, auquel le système de crabotage est relié par l'intermédiaire d'un moyen amortisseur travaillant en torsion ;
- la portion d'extrémité de l'arbre primaire est centrée et guidée en rotation, par l'intermédiaire d'un palier de roulement, dans un alésage ménagé à l'extrémité de l'arbre de vilebrequin.

D'autres caractéristiques et avantages de l'invention apparaîtront de la description qui va suivre, en référence aux dessins annexés qui représentent un mode de réalisation possible de l'objet de cette invention.

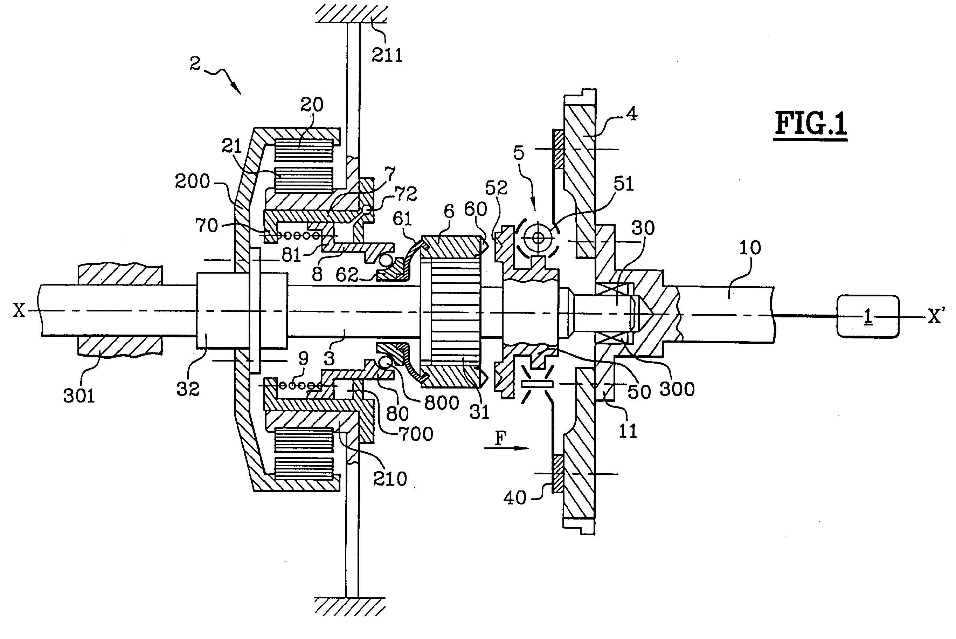

Sur les dessins, la figure 1 (figure unique) est une vue générale, très schématique, d'un système d'entraînement conforme à l'invention.

Sur cette figure, on a désigné par la référence **XX'** l'axe commun à l'arbre de vilebrequin du moteur thermique, référencé 10, et à l'arbre primaire de la boîte de vitesses, référencé 3, ces deux arbres étant montés bout-à-bout.

De manière traditionnelle, l'arbre 10 est entraîné par un moteur thermique 1 de type connu, à essence ou Diesel.

L'arbre 3 est l'arbre d'entrée d'une boîte de vitesses, également de type connu, non représentée, qui est située sur la gauche du dessin.

Il peut s'agir soit d'une boîte de vitesses à commande manuelle, soit d'une boîte de vitesses automatique.

Sur l'extrémité 11 de l'arbre 10 est fixé, de manière usuelle, un volant d'inertie 4.

L'arbre 3 est guidé en rotation, d'une part, dans un palier fixe 301 (solidaire du carter de la boîte de vitesse), d'autre part, par sa portion d'extrémité libre 30 dans un alésage prévu à l'extrémité de l'arbre 10, ceci par l'intermédiaire d'un palier 300, par exemple un roulement à aiguilles.

Ainsi, les deux arbres 10 et 3 sont parfaitement alignés suivant **XX**', et sont susceptibles de tourner indépendamment l'un de l'autre autour de leur axe commun.

Le moteur électrique, référencé 2, comprend un stator annulaire 21, d'axe **XX**', qui est porté par une pièce fixe 210, laquelle est solidaire du bâti 211, par exemple du carter de la boîte de vitesses.

Le rotor 20, également annulaire, entoure coaxialement le stator 21 ; il est porté par une pièce 200, en forme générale d'assiette, qui est fixée à un manchon 32; celui-ci est solidaire, aussi bien en rotation qu'en translation, de l'arbre 3 sur lequel il est monté.

La mise en marche du moteur électrique 2 entraîne par conséquent la rotation du manchon 32 et, corrélativement, de l'arbre 3 autour de son axe **XX**'.

Le volant d'inertie 4 porte un système amortisseur 5, travaillant en torsion, de type connu.

Ce système amortisseur comprend essentiellement trois parties, une partie annulaire 40 fixée rigidement au volant 4, par exemple au moyen de vis, une partie (en forme de manchon) 50 centrée sur l'arbre 3 et libre en rotation par rapport à celui-ci et une partie intermédiaire 51, constituée par un dispositif présentant une certaine élasticité en torsion, qui assure la liaison avec un certain degré de liberté en rotation, entre le volant 4 et l'arbre 3 de manière à éviter des à-coups.

Le montage de la pièce 50 sur l'arbre 3 est assuré par des moyens appropriés de type connu, par exemple un roulement à aiguilles.

Selon une caractéristique essentielle de l'invention, cette pièce 50 est pourvue d'éléments de crabotage 52, matérialisés sur la figure par des cuvettes coniques, dont l'ouverture est dirigée vers la gauche.

En regard de ces éléments 52 sont disposés des éléments de crabotage complémentaires, en l'occurrence des tétons coniques 60 dirigés vers la droite, qui sont portés par une pièce annulaire 6, guidée en translation sur un manchon cannelé 31 porté par l'arbre 3.

Cette représentation est symbolique. Le crabotage pourrait être obtenu par emboîtement axial d'un pignon dans une couronne annulaire dentée complémentaire.

La pièce 6 est donc entraînée en rotation avec l'arbre 3, mais peut coulisser axialement selon **XX'**, dans un sens ou dans l'autre. A chaque élément de crabotage mâle 60 est associé un élément complémentaire femelle 52.

Le support 210 du stator 21 du moteur électrique 2 présente une ouverture annulaire cylindrique d'axe **XX'**, à l'intérieur de laquelle est montée et fixée une pièce 7 tubulaire qui a la forme générale d'un manchon.

Ce manchon constitue la chemise d'un cylindre hydraulique à l'intérieur duquel est monté un piston 8, également annulaire, susceptible de coulisser axialement selon **XX'**.

Comme on le voit sur la figure 1, le piston 8 et le cylindre 7 sont conformés de manière à constituer un vérin hydraulique à simple effet, dont la chambre de pression, référencée 700, est située du côté droit de la figure, vers l'extrémité libre de l'arbre 3 (du côté opposé à la boîte de vitesses).

Des canaux appropriés 72 ménagés dans la pièce 7 permettent d'alimenter cette chambre à partir d'une source de pression hydraulique équipant le véhicule, via une vanne de commande ad hoc, non représentée.

Bien entendu, le piston et le cylindre sont munis de joints d'étanchéité appropriés, non représentés.

Un moyen élastique, tel qu'un ressort hélicoïdal 9, d'axe **XX'**, agit sur le piston 8, de manière à le déplacer normalement vers la droite de la figure.

Sa force est déterminée pour repousser énergiquement le piston 8 dans ce sens en cas de mise en dépression ou sous pression atmosphérique de la chambre 700. En revanche, elle est insuffisante pour s'opposer au déplacement du piston en sens inverse (vers la gauche) lorsque la chambre 700 est sous pression hydraulique.

Dans l'exemple illustré, ce ressort 9 est intercalé entre une embase annulaire 70 de la pièce 7 et un décrochement 81 formé dans la paroi du piston.

L'embase 70 est avantageusement une pièce rapportée, vissée à l'extrémité de la pièce 7.

Le piston annulaire 8 porte la partie extérieure 80 d'une cage de roulement à billes, dont les billes sont référencées 800 sur la figure, et dont la cage intérieure est référencée 62.

Cette dernière est solidaire d'une coupelle 61 fixée au manchon 6 précité, lequel constitue le baladeur du système de crabotage.

Grâce à la cage de roulement à billes, le manchon 6 est solidaire en translation axiale du piston 8, tout en pouvant tourner par rapport à ce dernier en même temps que l'arbre rotatif 3, par suite de la présence des cannelures sur le manchon 31.

Le piston 8 est immobilisé en rotation dans le cylindre fixe 7.

Dans la position illustrée sur la figure 1, le système est décraboté, les éléments mâles 60 se trouvant écartés des éléments femelles 52.

Cet état résulte de la mise sous pression de la chambre 700 du vérin hydraulique 7, 8.

Si le moteur thermique 1 est arrêté, et le moteur électrique 2 en marche, l'arbre 3 d'entrée de la boîte de vitesses est entraîné directement et uniquement par le rotor tournant 20.

Si on veut démarrer le moteur thermique 1, on met la chambre 700 à pression atmosphérique, et le ressort 9 repousse l'ensemble 8, 61, 6 vers la droite de la figure, en direction de la pièce 50, comme symbolisé par la flèche **F**.

Les pièces mâles 60 viennent alors s'enclencher dans les cuvettes 52, assurant le crabotage des pièces 6 et 50.

L'arbre 10 est ainsi entraîné en rotation par le moteur électrique, via le système amortisseur 5, qui absorbe dans une certaine mesure le choc dû au crabotage.

Ceci permet de démarrer le moteur thermique 1.

Si la chambre 700 est maintenue sous dépression (ou à pression atmosphérique), le moteur thermique en fonctionnement assure alors l'entraînement de l'arbre 3, via le système de crabotage.

Cet entraînement est réalisé, même si on arrête l'alimentation du moteur électrique 2.

Pour désaccoupler l'arbre 3 du moteur thermique 1, il suffit d'alimenter en pression hydraulique la chambre 700, ce qui provoque le déplacement du piston 8 vers la gauche de la figure, à l'encontre de l'effort de compression du ressort 9, et réalise le décrabotage.

Le pilotage du système peut se faire au besoin de manière automatique, grâce à des capteurs de vitesse de rotation du moteur thermique et du moteur électrique. Ainsi, il est possible par exemple d'utiliser le moteur électrique pour démarrer le moteur thermique ou, lorsqu'on est en mode électrique, de passer en mode thermique en accélérant le moteur thermique et en provoquant le crabotage, dès que le moteur a démarré, lorsque sa vitesse de rotation devient égale à celle du moteur électrique.

Du fait que les moyens d'actionnement du système de crabotage sont logés à l'intérieur du moteur électrique, ce groupe motopropulseur hybride est très compact en direction axiale.

## Revendications

1. Système d'entraînement de l'arbre primaire (3) de boîte de vitesses pour véhicule à propulsion hybride, réalisée à partir d'un moteur thermique (1) et/ou d'un moteur électrique (2), dans lequel l'arbre primaire (3) est solidaire du rotor (20) du moteur électrique (2), caractérisé par le fait que cet arbre primaire (3) est monté coaxialement à une extrémité de l'arbre de vilebrequin (10) du moteur thermique (1), et qu'un système de crabotage (6, 7) permet, sélectivement, soit de solidariser en rotation l'arbre de vilebrequin (10) avec ledit arbre primaire (3), soit, au contraire, de l'en désolidariser.

2. Système selon la revendication 1, caractérisé par le fait que le système de crabotage (6,7) est à commande hydraulique.

3. Système selon la revendication 2, caractérisé par le fait que les moyens de commande du système de crabotage (6, 7) comprennent un piston hydraulique annulaire (8), qui entoure coaxialement l'arbre primaire (3), et est monté fixe en rotation et mobile en translation axiale.

4. Système selon la revendication 3, caractérisé par le fait que ledit piston (8) agit par l'intermédiaire d'une liaison tournante (80, 800, 62) sur un manchon de crabotage (31) solidaire en rotation de l'arbre primaire (3), mais mobile en translation axiale sur celui-ci.

5. Système selon la revendication 3 ou 4, caractérisé par le fait que ledit piston (8) est monté coulissant dans un manchon (7) solidaire du stator (21) dudit moteur électrique (2).

6. Système selon l'une des revendications 3 à 5, caractérisé par le fait que ledit piston (8) est sollicité en permanence par un moyen élastique tel qu'un ressort (9), qui tend naturellement à assurer le crabotage de système (6, 7) en l'absence de pression hydraulique.

7. Système selon l'une des revendications précédentes, caractérisé par le fait que l'extrémité d'arbre du vilebrequin (10) porte un volant d'inertie (4), auquel le système de crabotage (6, 7) est relié par l'intermédiaire d'un moyen amortisseur (5) travaillant en torsion.

8. Système selon les revendications précédentes, caractérisé par le fait que la portion d'extrémité (30) de l'arbre primaire (3) est centrée et guidée en rotation, par l'intermédiaire d'un palier de roulement (300), dans un alésage ménagé à l'extrémité de l'arbre de vilebrequin (10).
